# EUROPEAN PATENT SPECIFICATION

(11) **EP 1 695 858 B1**
(45) Date of publication and mention of the grant of the patent: **06.05.2009**
(21) Application number: 05101372.0
(22) Date of filing: 23.02.2005
(51) Int. Cl.: B60K 28/14

(54) **Saddle ride type all-terrain vehicle**
Geländefahrzeug mit Sattel
Véhicule tout-terrain du type à selle

(43) Date of publication of application: 30.08.2006
(73) Proprietor: HONDA MOTOR CO., LTD., Tokyo (JP)
(72) Inventor: Tsuruta, Yuichiro, 4-1-, Chuo 1 chome Wako-shi Saitama (JP)
(74) Representative: Poulin, Gérard

(56) References cited:
- WO-A-03/074351
- DE-A1- 2 624 609
- DE-A1- 3 714 111
- DE-A1- 3 939 410
- DE-A1- 10 142 725
- DE-A1- 10 334 095
- US-A- 2 757 749
- US-A- 3 772 643
- US-A1- 2004 201 197
- US-A1- 2004 256 170

## Description

### TECHNICAL FIELD

The present invention relates to a saddle ride type all-terrain vehicle, particularly to a saddle ride type all-terrain vehicle including a sensor for detecting the tumble of a vehicle body.

### BACKGROUND ART

In motorcycles including a fuel injection system, a system is provided for automatically stopping the engine by stopping the fuel pump when the vehicle has tumbled. For example, in a motorcycle described in Japanese Utility Model Publication No. Sho 60-4857, a spherical magnet is rollably placed inside a U-shaped groove formed in a non-magnetic case. The rolling of the spherical magnet attendant on an inclination of the vehicle body is sensed by a reed switch, whereby the tumble of the vehicle body is detected, and the engine is stopped.

Tumble detecting sensors for a motorcycle that have been known detect that the vehicle body is inclined to either the left or right side by an amount of not less than a predetermined value. In response to the detection, the engine is stopped. In the cases of motorcycles where the vehicle body may be expected to tumble to the left or right side, such a sensor detects the tumble of the vehicle body, and the engine can be stopped. In the case of a saddle ride type all-terrain vehicle (hereinafter referred to as "ATV"), on the other hand, the determination of tumble should be taken into account not only in the left-right direction but also in the front-rear direction, during when the vehicle is ascending or descending a steep slope or in the like situations.

It is an object of the present invention to provide an ATV having a sensor system capable of accurately determining a tumble during when the vehicle is running on a steep slope or in the like situations.

US 2 757 749 shows a vehicle according to the preamble of claim 1.

### DISCLOSURE OF THE INVENTION

In order to attain the above object, the present invention is firstly characterized in that an ATV having an engine and a saddle type driver's seat includes: a first sensor for detecting the inclination in the left-right direction of a vehicle body; a second sensor for detecting the inclination in the front-rear direction of the vehicle body; a control means for determining a tumble based on outputs from the first sensor and the second sensor; and a means for stopping the supply of a fuel to the engine when it is determined by the control means that the tumble has occurred.

In addition, according to the present invention, the first sensor and the second sensor each include a movable portion displaced in response to the inclination, and the first sensor and the second sensor are disposed such that the extension lines of the responding directions of the movable portions intersect orthogonally.

Besides, according to the present invention, the first sensor and the second sensor are disposed such that the extension line of the responding direction of the movable portion of one of the first sensor and the second sensor crosses the other of the first sensor and the second sensor.

Further, according to the present invention, the ATV includes a steering shaft for supporting a steering handle of the vehicle, and a fuel tank located on the rear side of the steering shaft, and that the first sensor and the second sensor are disposed between the steering shaft and the fuel tank.

Furthermore, according to the present invention, the fuel tank has an outside shape provided with a recess at a front portion thereof, and the first sensor and the second sensor are disposed in the recess.

According to the present invention, the ATV has the sensors capable of detecting not only the inclination in the left-right direction of the vehicle body but also the inclination in the front-rear direction of the vehicle body, so that, in the ATV, which may be expected to run while being inclined in the left-right direction and in the front-rear direction, it is possible to determine a tumble based on the outputs from the first and second sensors and to stop the supply of a fuel.

Particularly according to claim 3, the first sensor and the second sensor are disposed roughly at the same position. Specifically, the two sensors are located at the same position in the vehicle length direction or in the vehicle width direction. Therefore, it is possible to detect the front-rear inclination and the left-right inclination at roughly the same position.

In addition, according to claim 4, the first sensor and the second sensor are disposed in the vicinity of the steering shaft, i.e., near a central portion of the vehicle body, so that the sensors are protected from the external sprinkles or splashes of dust, mud, water, or the like during when the vehicle is running on a wild ground.

According to claim 5, the tumble sensors disposed in the recess is protected by the fuel tank, so that the sensors are less liable to be influenced by external forces.

### BRIEF DESCRIPTION OF THE DRAWINGS

Figure 1 is a left side view of an ATV according to one embodiment of the present invention.
Figure 2 is a perspective view of the ATV according to one embodiment of the present invention.
Figure 3 is a plan view of the ATV according to one embodiment of the present invention.
Figure 4 is a front view of an essential part of the ATV according to one embodiment of the present invention.
Figure 5A is a plan sectional view of a tumble sensor.
Figure 5B is a front sectional view of the tumble sensor.
Figure 6 is a block diagram showing one example of a fuel supply stopping system.
Figure 7 is a perspective view of an essential part of the ATV, showing the layout of the tumble sensors.

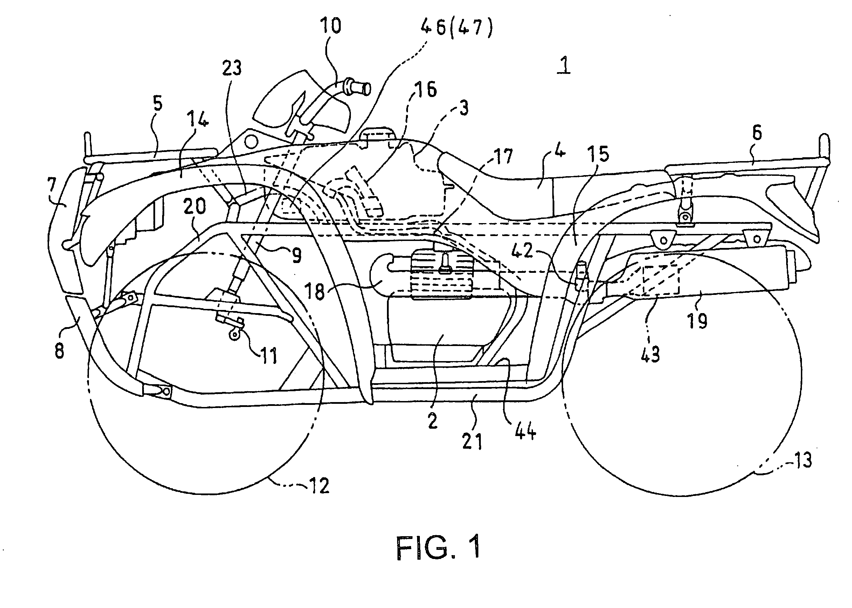

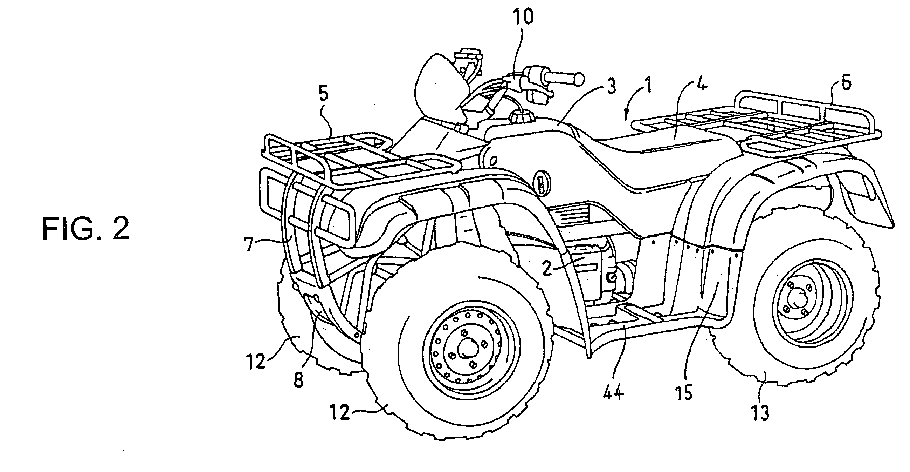

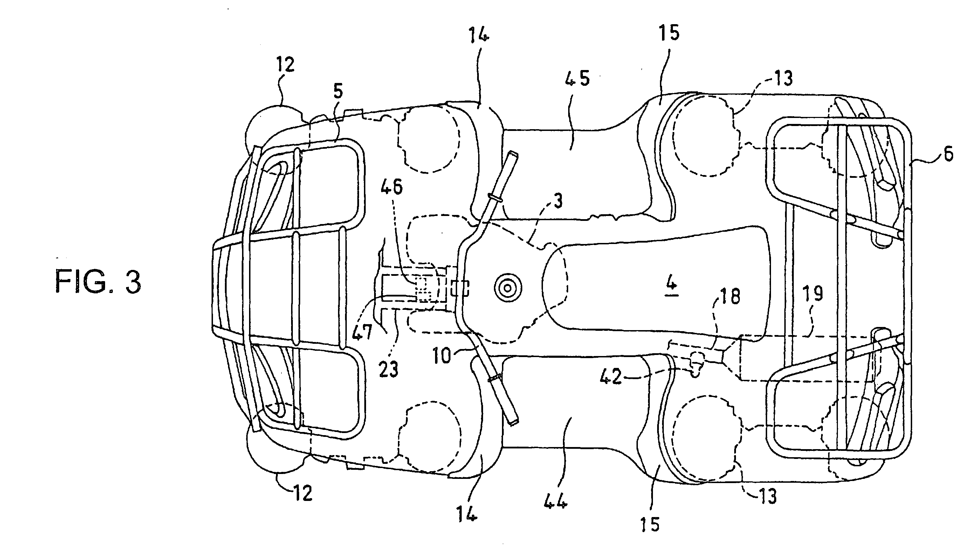

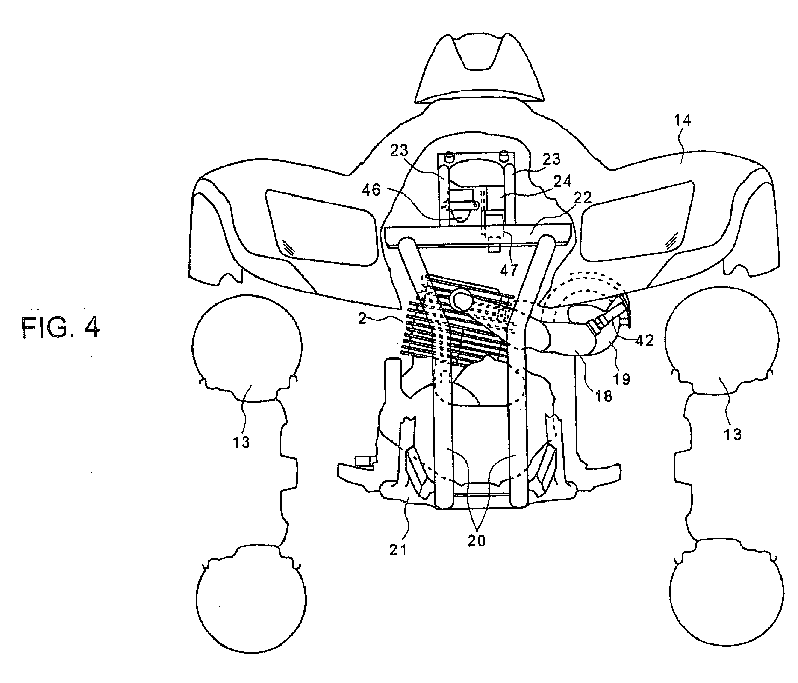

Now, one embodiment of the present invention will be described below, referring to the drawings. Fig. 2 is a perspective view of an ATV with tumble sensors mounted thereon according to one embodiment of the present invention, Fig. 3 is a plan view of the same, and Fig. 1 is a left side view of the same. Besides, Fig. 4 is a front view showing an essential part of a left side portion of the ATV. In these figures, the ATV 1 includes an engine 2 located at a central portion of the vehicle body, a fuel tank 3 located on the upper side of the engine 2, a rider's seat 4 and front and rear luggage carriers 5 and 6, and a front guard 7 and an under guard 8 provided at the frontmost end of the vehicle. As understood from Fig. 3, a front portion of the fuel tank 3 is recessed toward the vehicle rear side, and a steering shaft 9 is provided extending vertically through the portion of the recess. In other words, the presence of the recess obviates the interference between the fuel tank 3 and the steering shaft 9, and enables the fuel tank 3 to be expanded to the vehicle front side. In addition, as will be described later, a tumble sensor can be provided in the space formed by the recess, and the influences of external forces on the tumble sensor can be reduced by the fuel tank 3.

A steering handle 10 is provided at an upper portion of the steering shaft 9, and a link 11 is provided at a lower portion of the steering shaft 9. The link 11 is connected to a front wheel 12 through a connection device not shown. Rear wheels 13 are provided at rear portions of the vehicle. A front fender 14 and a rear fender 15 including tire houses are provided on the upper side of the front wheel 12 and the rear wheels 13 so as to cover the wheels 12 and 13. Foot rests 44 and 45 for the rider seated astride the rider's seat 4 to put his feet on are provided between the front fender 14 and the rear fender 15.

A fuel pump 16 is contained in the fuel tank 3, and a fuel pumped up by the fuel pump 16 is supplied to a fuel injection valve (not shown) through a fuel hose 17. An exhaust pipe 18 led out from the engine 2 to the front side is led around a lateral side of the engine 2 to extend rearwards, and is connected to a muffler 19 disposed on the vehicle rear side. A catalyst 43 for cleaning and removing harmful components contained in the exhaust gas is provided inside the muffler 19. An oxygen concentration sensor 42 is provided in the vicinity of a connection portion of the exhaust pipe 18 for connection with the muffler 19, namely, immediately on the upstream side of the catalyst 43.

The ATV 1 includes a control system for detecting the fuel-air ratio of a fuel-air mixture combusted in the engine 2 based on the concentration of oxygen in the exhaust gas and determining the amount of fuel injected by a fuel injection system based on the detection results (the fuel injection system and the control system are known and are therefore not shown in the figures). The oxygen concentration sensor 42 is provided for detecting the oxygen concentration in the exhaust gas and supplying the detection results to the control system.

The exhaust pipe 18 is exposed to the exterior at a lateral side of the engine 12, and its portion on the rear side extends into an inside space surrounded by the rear fender 15. Thus, the oxygen concentration sensor 42 is away from the feet of the rider seated astride the rider's seat 4, and is protected by the fender 15. Therefore, the oxygen concentration sensor 42 is not projecting to the upper side of the foot rest 44 to hamper the movements of the rider's feet, so that the oxygen concentration sensor 42 does not spoil the living-comfort properties (ride comfort) for the rider and can be provided with good performance of protection against external forces.

The ATV 1 includes main frames 20 and an under frame 21, and the individual components of the vehicle are supported by the frames 20 and 21 and pipes or plates such as sub-frames and brackets, which are connected to the frames 20 and 21.

Tumble sensors 46 and 47 are provided between the fuel tank 3 and the steering shaft 9, by utilizing the portion of the recess of the fuel tank 3. The tumble sensors 46 and 47 can be mounted to brackets (shown on [0021] ) connected to the main frames 20. The sensor 46 is a left-right tumble sensor to generate an output according to the inclination of the vehicle body when the vehicle body is inclined in the left-right direction. On the other hand, the sensor 47 is a front-rear tumble sensor to generate an output according to the inclination of the vehicle body when the vehicle body is inclined in the front-rear direction.

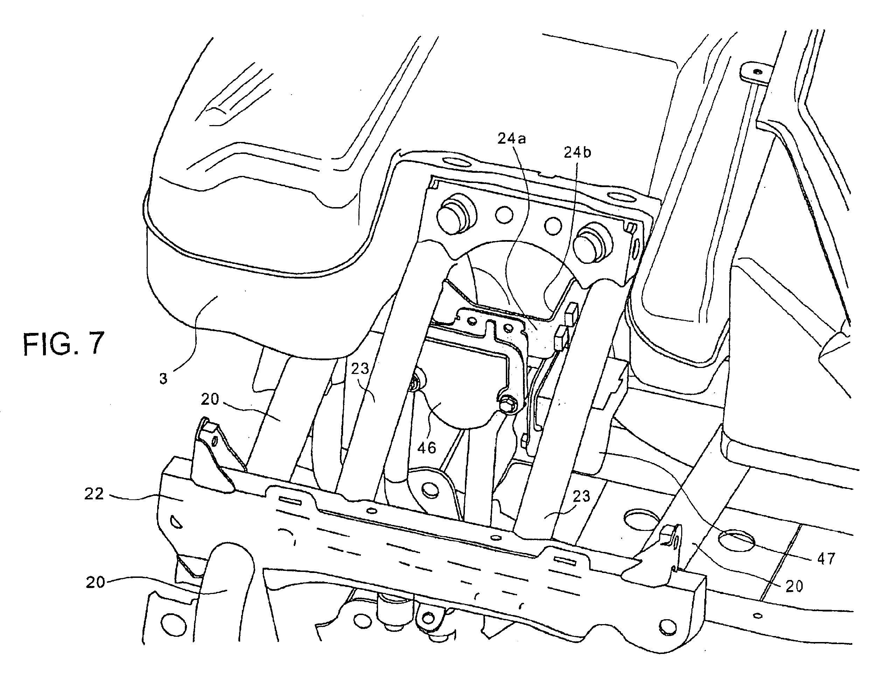

Fig. 7 is a perspective view of an essential part of the vehicle body, showing the layout of the tumble sensors 46 and 47. Next, the layout of the tumble sensors and a support structure therefor will be described referring principally to Figs. 4 and 7. A bar 22 extending in the vehicle body left-right direction is joined to the main frames 20, 20, and two sub-frames 23, 23 extending rearwards through the recess of the fuel tank 3 are joined to the bar 22 so as to extend toward the vehicle body rear side therefrom. A sensor mounting stay 24 is bridgingly provided between the sub-frames 23, 23.

The steering shaft 9 is disposed to pass vertically between the stay 24 and the bar 22, between the sub-frames 23, 23. Therefore, the tumble sensors 46 and 47 supported by the stay 24 are disposed in the space formed due to the recess of the fuel tank 3 and on the rear side of the steering shaft 9.

The stay 24 includes a mount surface 24a for the tumble sensor 46 and a mount surface 24b for the tumble sensor 47. The mount surface 24a is a surface orthogonal to the running direction of the ATV 1, while the mount surface 24b is a surface formed along the running direction. The tumble sensor 46 is fixed to the mount surface 24a by a bolt or the like, and the tumble sensor 47 is fixed to the mount surface 24b by a bolt or the like.

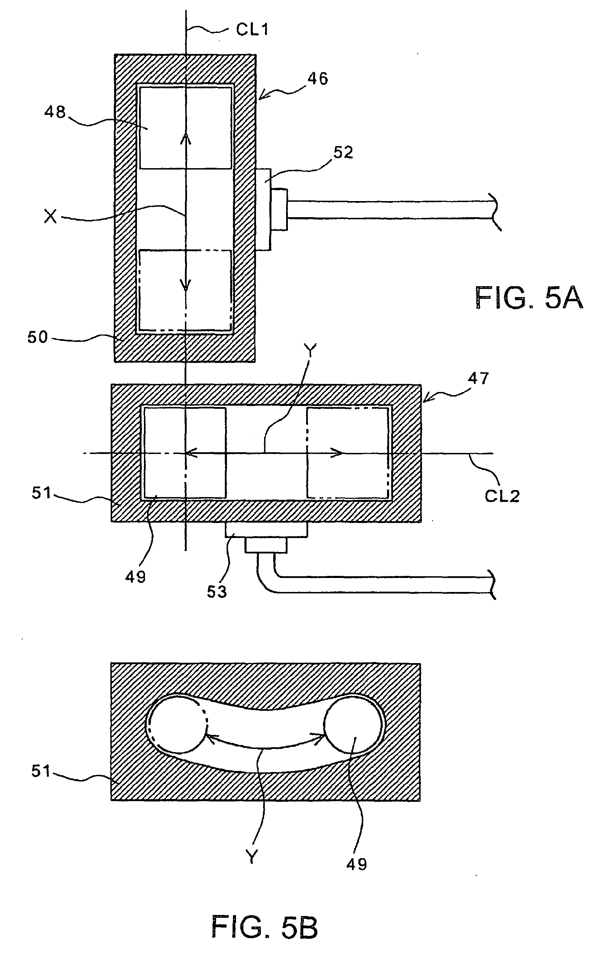

Fig. 5A is a plan sectional view showing the layout of the tumble sensors, and Fig. 5B is a front sectional view of the same. The tumble sensors 46 and 47 include resin-made cases 50 and 51 in which magnet rollers 48 and 49 are contained, respectively. Magnetic sensors 52 and 53 are provided on the outer surface of the central portion of the cases 50 and 51. The rollers 48 and 49 are rollable in the directions of arrows X and Y in the cases 50 and 51, respectively. The inside shapes of the cases 50 and 51 are roughly U shaped, with a central portion being lower, so that the rollers 48 and 49 rest at the centers in the cases 50 and 51 when the vehicle body is not inclined.

The direction Y is along the forward running direction of the ATV 1, and the direction X is set to be orthogonal to the direction Y. In addition, the extension line of the center line CL1 of the roller 48 crosses at least the case 51 of the tumble sensor 47. Specifically, the tumble sensor 46 and the tumble sensor 47 are disposed roughly at the same position in the vehicle body front-rear direction.

This layout of the sensors can be modified. For example, the extension line of the center line CL2 of the roller 49 crosses at least the case 50 of the tumble sensor 46. In this case, the tumble sensor 46 and the tumble sensor 47 are disposed roughly at the same position in the vehicle body width direction.

The magnetic sensors 52 and 53 generate outputs according to the magnitudes of magnetic fields sensed attendant on the displacements of the rollers 48 and 49. In this example, as the inclination of the vehicle body increases, the roller comes farther away from the magnetic sensor, so that the output level of the magnetic sensor decreases.

As such a type of sensor, there can be used, for example, the one described in Japanese Patent Laid-open No. Sho 60-255589. However, the tumble sensor is not limited to this type, and any of known inclination sensors can be used.

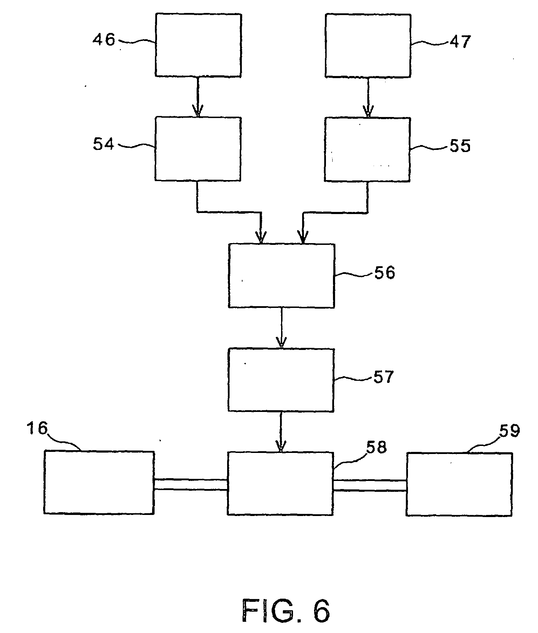

Fig. 6 is a block diagram showing one example of a fuel supply stopping system using tumble sensors. In Fig. 6, output signals from the tumble sensors 46 and 47 (here, outputs from the magnetic sensors 52 and 53) are compared with tumble reference levels in level determination units 54 and 55. The results of determination of the levels in the level determination units 54 and 55 are used for tumble determination in a tumble determination unit 56. Algorithm for the tumble determination can be set in various ways; for example, the occurrence of a tumble may be determined when the level of the signal from one of the sensors shows a tumble with reference to the tumble reference level, or the tumble determination may be made on the basis of the detection levels at both the sensors in combination. The level determination units 54 and 55 and the tumble determination unit 56 can be composed of a microcomputer.

Incidentally, the tumble determination may be not dependent on only the detection signals from the tumble sensors 46 and 47; for example, the tumble determination may be conducted by taking into account throttle opening, speed, acceleration, brake signal, steering handle steering angle, or the like.

When it is determined in the tumble determination unit 56 that a tumble has occurred, a fuel cutoff relay 57 is turned ON, to close a cutoff valve 58. The cutoff valve 58 may be provided, for example, at an intermediate portion of the fuel hose 17. This ensures that upon a tumble of the vehicle body, the cutoff valve 58 is closed, whereby the fuel supply from the fuel pump 16 to a fuel injection valve 59 is stopped. Incidentally, the fuel supply may be stopped by closing a fuel supply pipe (fuel hose 17) in this manner, alternatively, by cutting off the power supply to the fuel pump 16.

While the above embodiment has been described based on an example in which the fuel pump 16 is contained in the fuel tank 3, the layout of the fuel pump is not limited to this example; the fuel pump may be separately provided in the exterior of the fuel tank.

## Claims

1. Saddle ride type all-terrain vehicle having an engine (2), and a saddle type driver's seat (4), said saddle ride type all-terrain vehicle comprising:
a first sensor (46) for detecting the inclination in the left-right direction of a vehicle body;
a second sensor (47) for detecting the inclination in the front-rear direction of said vehicle body;
a control means for determining tumble based on outputs from said first sensor (46) and said second sensor (47); and
a means (57, 58) for stopping the supply of a fuel to said engine (2) when it is determined by said control means that the tumble has occurred;
a steering shaft (9) for supporting a steering handle (10) of said vehicle, and a fuel tank (3) located on the rear side of said steering shaft (9), **characterized in, that** said first sensor (46) and said second sensor (47) being disposed between said steering shaft (9) and said fuel tank (3), said fuel tank (3) having an outside shape provided with a recess at a front portion thereof, and said first sensor (46) and said second sensor (47) being disposed in said recess.

2. Saddle ride type all-terrain vehicle according to claim 1, wherein said first sensor (46) and said second sensor (47) each comprise a movable portion (48, 49) displaced in response to the inclination, and said first sensor (46) and said second sensor (47) are disposed such that the extension lines (CL1, CL2) of the responding directions of said movable portions (48, 49) intersect orthogonally.

3. Saddle ride type all-terrain vehicle according to claim 1 or 2, wherein said first sensor (46) and said second sensor (47) are disposed such that the extension line (CL1, CL2) of the responding direction of said movable portion (48, 49) of one of said first sensor (46) and said second sensor (47) crosses the other of said first sensor (46) and said second sensor (47).

## Patentansprüche

1. Geländefahrzeug vom Sattelfahrtyp, welches einen Motor (2) und einen sattelartigen Fahrersitz (4) aufweist, wobei das Geländefahrzeug vom Sattelfahrtyp umfasst:
einen ersten Sensor (46) zum Erfassen der Neigung in der Links-Rechts-Richtung eines Fahrzeugkörpers;
einen zweiten Sensor (47) zum Erfassen der Neigung in der Vorn-Hinten-Richtung des Fahrzeugkörpers;
eine Lenksäule (9) zum Unterstützen eine Lenkstange (10) des Fahrzeugs, und einen Kraftstofftank (3), der sich auf der Rückseite der Lenkachse (9) befindet;
**dadurch gekennzeichnet, dass** das Geländefahrzeug vom Sattelfahrtyp umfasst:
ein Steuerungsmittel zum Bestimmen eines Sturzes basierend auf Ausgaben des ersten Sensors (46) und des zweiten Sensors (47); und
ein Mittel (57, 58) zum Stoppen der Zuführung von Kraftstoff an den Motor (2), wenn durch das Steuerungsmittel bestimmt wird, dass der Sturz aufgetreten ist;
wobei der erste Sensor (46) und der zweite Sensor (47) zwischen der Lenksäule (9) und dem Kraftstofftank (3) angeordnet sind, wobei der Kraftstofftank (3) eine Außenform aufweist, die eine Aussparung an einem vorderen Bereich davon bereitstellt, und wobei der erste Sensor (46) und der zweite Sensor (47) in der Aussparung angeordnet sind.

2. Geländefahrzeug vom Sattelfahrtyp nach Anspruch 1, wobei der erste Sensor (46) und der zweite Sensor (47) jeweils einen beweglichen Bereich (48, 49) umfassen, der als Antwort auf die Neigung verschoben wird, und wobei der erste Sensor (46) und der zweite Sensor (47) so angeordnet sind, dass sich die Erweiterungslinien (CL1, CL2) der Antwortrichtungen der beweglichen Bereiche (48, 49) orthogonal schneiden.

3. Geländefahrzeug vom Sattelfahrtyp nach Anspruch 1 oder 2, wobei der erste Sensor (46) und der zweite Sensor (47) so angeordnet sind, dass die Erweiterungslinie (CL1, CL2) der Antwortrichtung des beweglichen Bereiches (48, 49) von einem des ersten Sensors (46) und des zweiten Sensors (47) die des anderen des ersten Sensors (46) und des zweiten Sensors (47) kreuzt.

## Revendications

1. Véhicule tout-terrain de type à selle avec un moteur (2) et un siège de conducteur de type selle (4), ledit véhicule tout-terrain de type à selle comprenant :
un premier capteur (46) pour détecter l'inclinaison dans la direction gauche-droite d'un corps de véhicule;
un deuxième capteur (47) pour détecter l'inclinaison dans la direction avant-arrière dudit corps de véhicule ;
un arbre de direction (9) pour supporter un guidon de direction (10) dudit véhicule et un réservoir de carburant (3) situé sur le côté arrière dudit arbre de direction (9) ;
**caractérisé en ce que** ledit véhicule tout-terrain de type à selle comprend :
un moyen de commande pour déterminer le renversement sur la base de sorties provenant dudit premier capteur (46) et dudit deuxième capteur (47) ; et
un moyen (57, 58) pour arrêter l'alimentation de carburant audit moteur (2) quand il est déterminé par ledit moyen de commande que le renversement s'est produit ;
ledit premier capteur (46) et ledit deuxième capteur (47) étant disposés entre ledit arbre de direction (9) et ledit réservoir de carburant (3), ledit réservoir de carburant (3) ayant une forme extérieure pourvue d'un évidement au niveau d'une partie avant de celui-ci et ledit premier capteur (46) et ledit deuxième capteur (47) étant disposés dans ledit évidement.

2. Véhicule tout-terrain de type à selle selon la revendication 1, dans lequel ledit premier capteur (46) et ledit deuxième capteur (47) comprennent chacun une partie mobile (48, 49) déplacée en réponse à l'inclinaison, et ledit premier capteur (46) et ledit deuxième capteur (47) sont disposés de manière que la ligne de prolongement (CL1, CL2) des directions de réponse desdites parties mobiles (48, 49) s'intersectent orthogonalement.

3. Véhicule tout-terrain de type à selle selon la revendication 1 ou 2, dans lequel ledit premier capteur (46) et ledit deuxième capteur (47) sont disposés de manière que la ligne de prolongement (CL1, CL2) de la direction de réponse de ladite partie mobile (48, 49) d'un dudit premier capteur (46) et dudit deuxième capteur (47) coupe l'autre ligne de prolongement de la direction de réponse de ladite partie mobile dudit premier capteur (46) et dudit deuxième capteur (47).
